# EUROPEAN PATENT SPECIFICATION

(11) **EP 2 937 200 B1**
(45) Date of publication and mention of the grant of the patent: **29.08.2018**
(21) Application number: 15382202.8
(22) Date of filing: 22.04.2015
(51) Int. Cl.: B29K 21/00, B29L 30/00, B29K 105/06, B07B 4/08, B07B 11/06, B08B 5/04, B29B 17/02

(54) **DEVICE FOR SEPARATING TEXTILE FIBRES FROM A MASS COMPRISING TEXTILE FIBERS AND FRAGMENTS OF RUBBER**
VORRICHTUNG ZUR TRENNUNG VON TEXTILFASERN AUS EINER MASSE MIT TEXTILFASERN UND FRAGMENTEN VON KAUTSCHUK
DISPOSITIF POUR SÉPARER DES FIBRES TEXTILES À PARTIR D'UNE MASSE COMPRENANT DES FIBRES TEXTILES ET DES FRAGMENTS DE CAOUTCHOUC

(30) Priority: 24.04.2014 ES 201430607
(43) Date of publication of application: 28.10.2015
(73) Proprietor: Gestion Medioambiental De Neumaticos S.L., 25179 Maials (ES)
(72) Inventor: Gelpi Salat, Andreu, 25179 Maials (ES)
(74) Representative: Curell Suñol S.L.P.

(56) References cited:
- EP-A2- 2 789 443
- GB-A- 1 374 016
- GB-A- 190 418 651
- JP-A- 2002 307 436
- US-A- 1 607 291
- CAPELLE G: "STOFFLICHE VERWERTUNG VON ALTREIFEN UND GUMMIABFAELLEN//RECYCLING OF USED TIRES AND RUBBER SCRAP", GUMMI, FASERN, KUNSTSTOFFE.INTERNATIONALE FACHZEITSCHRIFT FUR DIE POLYMER-VERARBEITUNG, GENTNER VERLAG. STUTTGART, DE, vol. 50, no. 4, 1 January 1997 (1997-01-01), pages 297-303, XP001189442, ISSN: 0176-1625

## Description

### Field of the invention

The invention relates to a device for separating textile fibres from a mass comprising textile fibres and fragments of rubber, originating from a previous shredding stage, which comprises a vibrating surface with [a] an inlet area through which the mass enters and [b] an outlet area, where the mass travels along the vibrating surface from the inlet area to the outlet area.

### State-of-the-art

Every year a large number of tyres are thrown away. There are various processes aimed at recycling these thrown out tyres. One of the problems with tyre recycling is that the tyres usually have a plurality of metallic, wire-like elements in them (threads, rods, multi-core braided threads, meshes, etc.). They also usually have various textile materials in them. Therefore, a typical stage in tyre recycling procedures is separating the metallic, wire-like elements and the textile materials from the mass of rubber of the tyre. To carry out this separation a technique is known which consists in cutting and shredding the tyre into small fragments, which makes it possible to separate, at least partially, both the metallic wire-like elements and the textile material (which usually breaks down into its fibres) from the rubber mass. After separating the metallic wire-like elements (or part of them) usually a mass remains that mainly comprises textile fibres and fragments of rubber.

Generally, in this description and claims, the term "rubber" has been used in its broadest sense, so that it includes any elastomeric material used to make tyres, irrespective of whether it is, for example, natural rubber, synthetic elastomeric materials, or mixtures of the above.

EP 2.789.443 A2 discloses a plant for recycling plies and rubber of tyres, comprising at least a first device which comprises a breaker roller provided with tapered projections; a casing for accommodating and cladding the breaker roller; a bin communicating with the internal volume of the casing and able to be loaded with a material containing rubber bonded to the plies of tyres; a mobile pusher able to push the material internally of the casing against the breaker roller; and at least a sieve located vertically below the breaker roller. A further embodiment further provides a method and a plant for manufacturing products made of insulating material, using for example the plies of tyres separated by means of the preceding plant.

GB 1.374.016 describes a process for dressing storage battery scrap by mechanically separating the lead-containing components, i.e. grid plates; grid forming paste, pole heads and pole binders, from the non-lead-containing components, i.e. casings and separators. The lids and bottoms of the casings are cut off, e.g. by a circular saw, without smashing the casings and the components are removed from the remainder of the casings and subsequently the non lead containing and the lead-containing components are separately dressed. The grid plate packages are processed by breaking them up on vibrating screen, which comprises two halves and at the end of each of which is a suction device and a compressed air blower. The relatively light-plastics separator pieces are removed by this suction and an arrangement is provided between the two halves of the screen to turn over the remaining component pieces.

JP 2002307436 has as an objective to inexpensively and accurately remove foreign matter contained in a bottle ground material in order to effectively putting the recycle material of a PET bottle to practical use to effectively use the same as a raw material of engineering plastic in large quantities and to inexpensively provide pellets, which can be molded into a molded product reduced in the content of foreign matter when molded into an injection mold product, to a user in large quantities. The method for removing flake foreign matter is adapted when a recovered PET bottle is reutilized and has a process (A) for selectively removing a metal in the ground foreign matter present in ground flakes by a metal detector, a process (B) for irradiating the ground foreign matter present in ground flakes with light to measure the brightness of the surfaces of the flakes to selectively remove foreign matter low in brightness, a process (C) for washing the ground flakes and a process (D) for sorting the ground flakes on the basis of specific gravity.
GB 18651 describes an apparatus for separating vulcanised rubber from canvas, metal or other coverings or the like connected to it. The material to be treated, after being ground, is simultaneously subjected to a screening and to a winnowing operation by a current of air.

### Summary of the invention

The aim of the invention is a new device for separating textile fibres from a mass comprising textile fibres and fragments of rubber, originating from a previous shredding stage, that comprises a vibrating surface with [a] an inlet area where the mass enters and [b] an outlet area, where the mass travels along the vibrating surface from the inlet area to the outlet area, and, additionally, comprises, in the outlet area, some air blowing means arranged under the vibrating surface suitable for driving the fibres upwards against the force of gravity, and an extractor hood with some air suction means on the vibrating surface, opposite the air blowing means, characterised in that the extractor hood has a section with an increasing cross section in the direction of flow of air produced by the suction means. In effect, the separation between the fibres and the fragments will never be perfect, therefore it is inevitable that, together with the fibres, a certain amount of fragments of rubber are entrained as well. With the extractor hood having a section with an increasing cross section (in the direction of the flow of air produced by the suction means), then in this section the air speed will reduce, which will cause the fragments (at least the heaviest ones), to fall downwards again. This means, for example, that the current of air produced by the blowing means is slightly stronger, which makes it possible to separate the fibres from the fragments (which can be on top of them) more effectively, even though it is at the cost of also entraining some smaller fragments. These could be separated from the fibres in the section with the increasing cross section.
The new device allows also to perform a new procedure for separating textile fibres from the mass comprising textile fibres and fragments of rubber originating from a previous shredding stage, which comprises a vibration stage on a vibrating surface on which the mass moves where, after the vibration stage, it comprises a blowing stage wherein a current of air is blown under the vibrating surface and in the upward direction, whereby at least part of the fibres are entrained upwards.
Effectively, during the vibration stage the textile fibres tend to become segregated from the fragments of rubber, and even to aggregate to each other. These fibres and fibre aggregates have a relatively high aerodynamic drag compared with the aerodynamic drag of the fragments of rubber. This fact means that it is possible to blow under a current of air so that it entrains most of the fibres and fibre aggregates without entraining most of the fragments of rubber. This provides a very simple and highly effective separation procedure.
Preferably the vibrating surface comprises some sieving holes, so that at least part of the fibres remains retained on the vibrating surface. This succeeds in separating part of the smaller size fragments, which fall through the sieving holes, whereas the fibres and the larger size fragments are moved to the blowing area, where they are separated more easily as the smallest fragments (which possibly could be entrained by the current of air) have been separated beforehand.

Advantageously the procedure comprises a stage of suctioning the blown fibres by means of an extractor hood. This way, the fibres (and fibre agglomerates) which have been raised from the vibrating surface thanks to the air blown under them, are suctioned through an extractor hood, which has suction means producing a current of air that entrains the fibres through the extractor hood. This way the separated fibres can be led to a suitable place for their subsequent processing.

Preferably on the vibrating surface the mass is subjected to a helicoidal movement, which combines a driving movement parallel to the vibrating surface with a rotation movement around a rotation axis parallel to the vibrating surface. This movement facilitates and increases the separation of the fibres with respect to the fragments of rubber and, also, facilitates the formation of the fibre agglomerates, which can be separated more easily in the subsequent blowing. Preferably this helicoidal movement is not applied to the mass as a whole, but to the particles (fragments and fibres) which form it, individually. Therefore it is advantageous that the vibrating surface comprises a plurality of channels parallel to one another, among which the mass to be processed is distributed. This way, by combining a certain incline of the vibrating surface with some vibratory elements that make it vibrate, it is possible to produce the helicoidal movement. Advantageously the channels form a non-null angle with the incline of the vibrating surface. So, the particles are pushed against the wall of the channel by the force of gravity, and the vibration caused by the vibratory elements makes the particles raise from the vibrating surface. This way the particles move around in the space along said approximately helicoidal path, following the path defined by the channels. This way an advantageous solution of the invention is achieved, which consists in the rotation movement forming a non-null angle, preferably between 45º and 90º, with the maximum incline line of the vibrating surface.

As mentioned above, preferably the vibrating surface comprises some sieving holes suitable for letting at least part of the fragments fall and for retaining at least part of the fibres.

Advantageously the device comprises a second vibrating surface arranged below the vibrating surface, where the second vibrating surface has some sieving holes larger than the vibrating surface. In effect, this way a second vibrating stage can be carried out and, preferably, also the mass can be sieved. A preferable embodiment includes up to three vibrating surfaces, arranged one under the other.

Preferably the extractor hood is the shape of an inverted U. This way, the section with the increasing cross section can be located advantageously in the upward section of the inverted U whereas, once in the downward section the suctioned material (basically made up of fibres) is led to a suitable place for its subsequent processing. For its part, it is advantageous that at the exit end of the inverted U there is a section with a decreasing cross section with a horizontal outlet. This way, the suctioned material accelerates and avoids being deposited at the back of the outlet.
Generally, the sections of the hood with a variable cross section are frusto-pyramidal or frustoconical.

### Brief description of the drawings

Other advantages and characteristics of the invention can be appreciated from the following description, wherein, in a non-limiting way, some preferable embodiments of the invention are explained, with reference to the accompanying drawings, wherein:
Fig. 1 is a schematic perspective view of a vibrating surface according to the invention.
Fig. 2 is a schematic side view of a set of vibrating surfaces.
Fig. 3 is a schematic perspective view of an extractor hood according to the invention.

### Detailed description of some embodiments of the invention

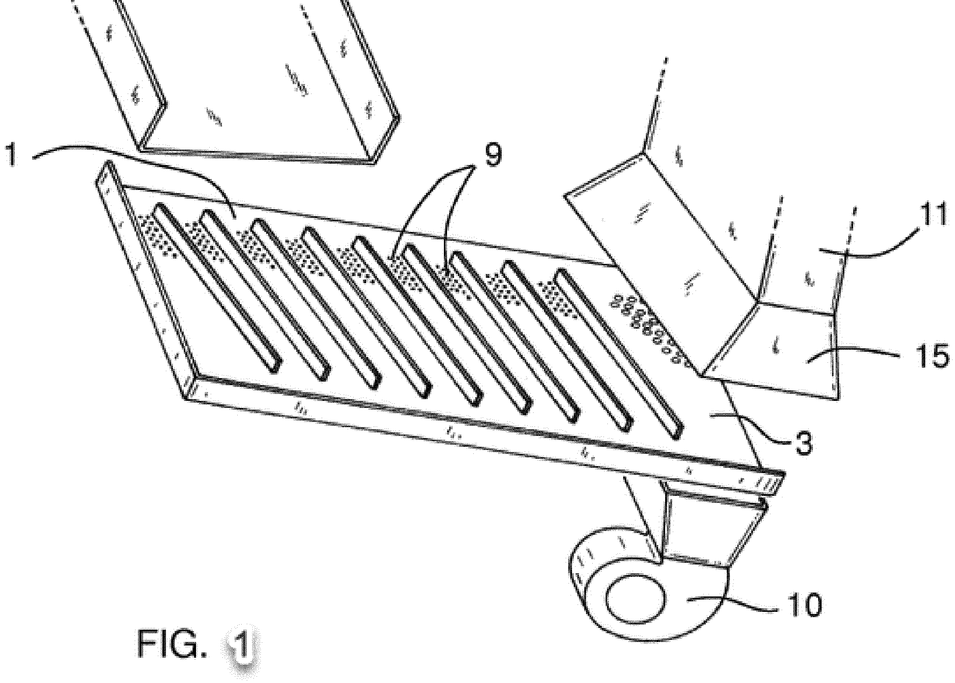

Fig. 1 shows a schematic, plan view of a vibrating surface according to the invention. Basically it is made up of a rectangular, rigid plate, for example metallic. It comprises an inlet area 1, on the left in Fig. 1, and an outlet area 3, on the right ir Fig. 1. The vibrating surface has a plurality of partitions 5 that define a plurality of channels 7 along which there moves the mass that comprises textile fibres and fragments of rubber. The central area of the vibrating surface has a plurality of sieving holes 9. The vibrating surface is inclined so that the outlet area 3 is lower than the inlet area 1. The vibrating surface vibrates thanks to some vibrating means (not shown in the Figs.). The mass is arranged in the inlet area 1 and, thanks to the vibration means and the inclination of the actual vibrating surface, it moves along the vibrating surface until the outlet area 3. The partitions 5 contribute to the mass particles making a helicoidal movement along the channels 7.

In the outlet area 3 there are some blowing means 10 under the vibrating surface. The blown air crosses the vibrating surface by means of some blowing holes 16 and impacts the mass in the outlet area 3. The air entrains most of the fibres and the fibre aggregates 12, whereas the fragments of rubber 14 remain (at least most of them) on the vibrating surface.

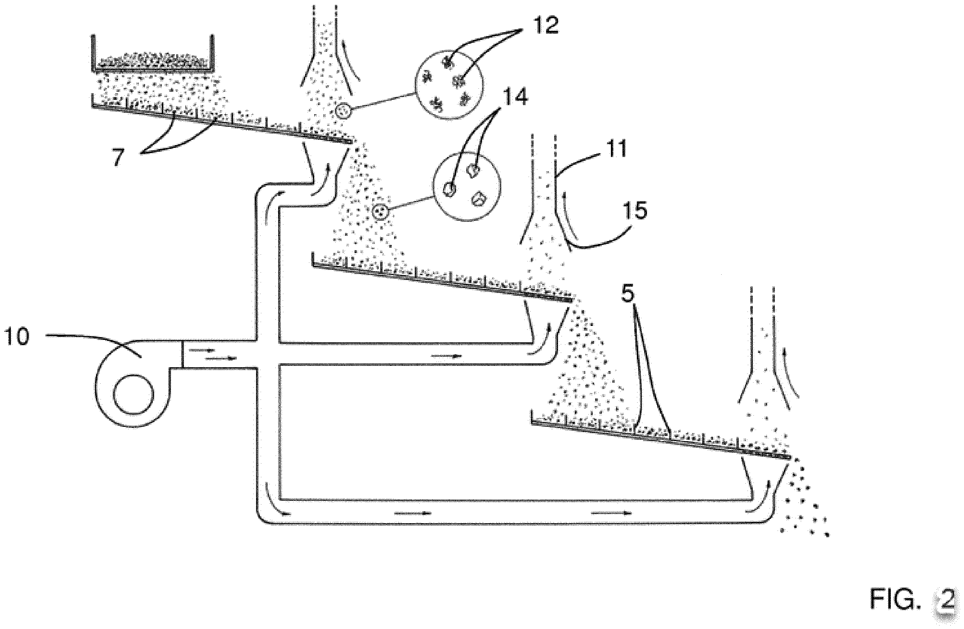

After the blowing, the mass that has remained in the outlet area 3 is taken to the inlet area 1 of a second vibrating surface arranged under the vibrating surface where the treatment is repeated. The second vibrating surface also receives the particles that have passed through the sieving holes 9, and has second sieving holes that are bigger than the sieving holes 9. The second vibrating surface has some second vibrating means and some second partitions 5 that define some second channels 7. In the outlet area 3 of the second vibrating surface there are some second blowing holes 16 and some second blowing means 10 that again entrain the textile fibres. Under the second vibrating surface there is a third vibrating surface equivalent to the second vibrating surface, with its partitions, vibrating means, sieving and blowing holes, blowing means, etc. Fig. 2 schematically shows a set of vibrating surfaces. For the sake of greater clarity in the Fig. 2, the vibrating surfaces have been shown in a staggered arrangement, although it is advantageous that they be in the same vertical plane and that they include sieving holes (not shown in Fig. 2 either), so that the sieved material falls directly onto the vibrating surface below.

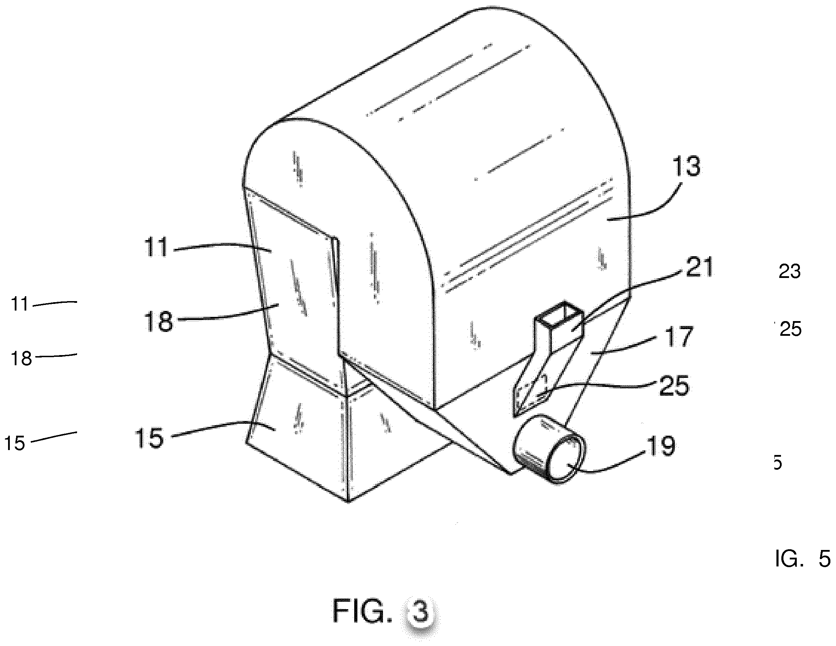

Fig. 3 shows an extractor hood according to the invention. It has a general inverted U shape, with an upward section 11 (in the circulation direction of the suctioned air) and a downwards section 13. At the start of the upwards section 11 there is a suction mouth 15 that is arranged next to the outlet area 3. This way, the fibres and the fibre aggregates 12 that have been lifted with respect to the vibrating surface thanks to the blowing means 10, are entrained by the current of air produced by some suction means in the hood (not shown in the Figs.). Optionally, as already mentioned above, the upward section 11 can have a section with an increasing cross section 18.
The downwards section 13 has a section with a decreasing cross section 17, where the fibres are accelerated and channelled towards an outlet duct 19.

Some air ducts 21 communicate the inside of the hood with the suction means.

## Claims

1. Device for separating textile fibres from a mass comprising textile fibres (12) and fragments of rubber (14), originating from a previous shredding stage, that comprises a vibrating surface with [a] an inlet area (1) where the mass enters and [b] an outlet area (3), where said mass travels along said vibrating surface from said inlet area (1) to said outlet area (3), and, additionally, comprises, in said outlet area (3), some air blowing means (10) arranged under said vibrating surface suitable for driving the fibres (12) upwards against the force of gravity, and an extractor hood with some air suction means on the vibrating surface, opposite said air blowing means (10), **characterised in that** said extractor hood has a section with an increasing cross section (18), in the direction of flow of air produced by the suction means.

2. Device according to claim 1, **characterised in that** said vibrating surface comprises some sieving holes (9) suitable for letting at least part of said fragments to fall and for retaining at least part of said fibres (12).

3. Device according to one of claims 1 or 2, **characterized in that** said vibrating surface comprises a plurality of channels parallel to one another, among which the mass to be processed is distributed, where said channels form a non-null angle with the incline of the vibrating surface, such that the mass is subjected on the vibrating surface to a helicoidal movement which combines a driving movement parallel to the vibrating surface with a rotation movement around a rotation axis parallel to the vibrating surface.

4. Device according to any of the claims 1 to 3, **characterised in that** it comprises a second vibrating surface arranged under the vibrating surface, where the second vibrating surface has some second sieving holes larger than the sieving holes (9) on the vibrating surface.

5. Device according to any of the claims 1 to 4, **characterised in that** said extractor hood is in the shape of an inverted U.

6. Device according to claim 5, **characterised in that** at the outlet end of the inverted U there is a section with a decreasing cross section (17) with a horizontal outlet.

## Patentansprüche

1. Vorrichtung zum Trennen von Textilfasern von einer Masse, die Textilfasern (12) und Fragmente von Gummi (14) umfasst, die von einer vorhergehenden Zerkleinerungs-Phase stammt, die eine Vibrierfläche mit [a] einem Einlassbereich (1), wo die Masse eintritt, und [b] einen Auslassbereich (3) umfasst, wobei die Masse entlang der Vibrierfläche von dem Einlassbereich (1) zu dem Auslassbereich (3) läuft, und, zusätzlich, in dem Auslassbereich (3) einige Luftblasmittel (10), die unter der Vibrierfläche angeordnet sind, die geeignet sind, die Fasern (12) aufwärts gegen die Gravitationskraft zu treiben, und eine Abzugshaube mit einigen Luftsaugmitteln an der Vibrierfläche, gegenüber den Luftblasmitteln (10), umfasst, **dadurch gekennzeichnet, dass** die Abzugshaube einen Abschnitt mit einem zunehmenden Querschnitt (18) in der Strömungsrichtung der Luft, die von den Saugmitteln erzeugt wird, aufweist.

2. Vorrichtung nach Anspruch 1, **dadurch gekennzeichnet, dass** die Vibrierfläche einige Sieblöcher (9) umfasst, die zum Fallenlassen von mindestens einem Teil der Fragmente und zum Zurückbehalten von mindestens einem Teil der Fasern (12) geeignet sind.

3. Vorrichtung nach einem der Ansprüche 1 oder 2, **dadurch gekennzeichnet, dass** die Vibrierfläche eine Vielzahl von Kanälen umfasst, die parallel zueinander sind, unter welchen die zu verarbeitende Masse verteilt wird, wobei die Kanäle einen Nicht-Null-Winkel mit der Neigung der Vibrierfläche bilden, so dass die Masse auf der Vibrierfläche einer schraubenartigen Bewegung unterworfen wird, die eine Antriebsbewegung parallel zu der Vibrierfläche mit einer Drehbewegung um eine Rotationsachse parallel zu der Vibrierfläche kombiniert.

4. Vorrichtung nach einem der Ansprüche 1 bis 3, **dadurch gekennzeichnet**, das diese eine zweite Vibrierfläche umfasst, die unter der Vibrierfläche angeordnet ist, wobei die zweite Vibrierfläche einige zweite Sieblöcher aufweist, die größer als die Sieblöcher (9) auf der Vibrierfläche sind.

5. Vorrichtung nach einem der Ansprüche 1 bis 4, **dadurch gekennzeichnet, dass** die Abzugshaube in der Form eines umgekehrten U's ist.

6. Vorrichtung nach Anspruch 5, **dadurch gekennzeichnet, dass** sich an dem Auslassende des umgekehrten U's ein Abschnitt mit einem abnehmenden Querschnitt (17) mit einem horizontalen Auslass befindet.

## Revendications

1. Dispositif pour séparer des fibres textiles d'une masse comprenant des fibres textiles (12) et des fragments de caoutchouc (14), provenant d'une étape précédente de broyage, qui comprend une surface vibrante avec [a] une zone d'entrée (1) où la masse entre et [b] une zone de sortie (3), ladite masse se déplaçant le long de ladite surface vibrante depuis ladite zone d'entrée (1) jusqu'à ladite zone de sortie (3), et, en outre, comprenant, dans ladite zone de sortie (3), des moyens de soufflage d'air (10) agencés sous ladite surface vibrante, appropriés pour entraîner les fibres (12) vers le haut contre la force de gravité, et une hotte d'aspiration avec des moyens d'aspiration d'air sur la surface vibrante, à l'opposé desdits moyens de soufflage d'air (10), **caractérisé en ce que** ladite hotte d'aspiration présente une section avec une section transversale croissante (18), dans la direction du flux d'air produit par les moyens d'aspiration.

2. Dispositif selon la revendication 1, **caractérisé en ce que** ladite surface vibrante comprend des trous de tamisage (9) aptes à laisser tomber au moins une partie desdits fragments et à retenir au moins une partie desdites fibres (12).

3. Dispositif selon l'une quelconque des revendications 1 ou 2, **caractérisé en ce que** ladite surface vibrante comprend une pluralité des canaux parallèles les uns aux autres, dans lesquels est distribuée la masse à traiter, où lesdits canaux forment un angle non nul avec l'inclinaison de la surface vibrante, de sorte que la masse est soumise sur la surface vibrante à un mouvement hélicoïdal qui combine un mouvement d'entraînement parallèle à la surface vibrante avec un mouvement de rotation autour d'un axe de rotation parallèle à la surface vibrante.

4. Dispositif selon l'une quelconque des revendications 1 à 3, **caractérisé en ce qu'**il comprend une seconde surface vibrante agencée sous la surface vibrante, où la seconde surface vibrante possède des seconds trous de tamisage plus grands que les trous de tamisage (9) sur la surface vibrante.

5. Dispositif selon l'une quelconque des revendications 1 à 4, **caractérisé en ce que** ladite hotte d'aspiration a la forme d'un U inversé.

6. Dispositif selon la revendication 5, **caractérisé en ce qu'**il existe à l'extrémité de sortie du U inversé une section avec une section décroissante (17) avec une sortie horizontale.
